# EUROPEAN PATENT APPLICATION

(11) **EP 3 992 159 A1**
(43) Date of publication of application: **04.05.2022**
(21) Application number: 21205419.1
(22) Date of filing: 28.10.2021
(51) Int. Cl.: C03B 19/14, B01B 1/00

(54) **MANUFACTURING METHOD AND MANUFACTURING APPARATUS OF POROUS GLASS BASE MATERIAL**

(30) Priority: 02.11.2020 JP 2020183929
(71) Applicant: SHIN-ETSU CHEMICAL CO., LTD., Tokyo 100-0004 (JP)
(72) Inventor: NODA, Naoto, Kamisu-shi (JP)
(74) Representative: Vossius & Partner Patentanwälte Rechtsanwälte mbB

(57) **Abstract**

When organic siloxane in a liquid state is used as a raw material for glass particles, the formation of polymerized substances is suppressed when the raw material is vaporized in a vaporizer. In the manufacturing method of porous glass base material according to the present invention, the liquid organic siloxane, which is the raw material, is mixed with a carrier gas in the vaporizer 6, vaporized by the heat generated from the inner wall of the vaporizer heated by a heater unit 11, and supplied to the burner 9 as a gas raw material. The porous glass base material is manufactured by depositing the glass particles generated by the combustion of the gas raw material on the starting material. The heating output of the heater unit 11 is controlled so that the maximum temperature of the inner wall of the vaporizer is 230°C or lower.

## Description

### BACKGROUND

### Technical Field

The present invention relates to a manufacturing method of porous glass base material using organic siloxane raw material and a manufacturing apparatus.

### Background Art

Conventionally, a method for manufacturing a porous glass fine particle body (porous glass base material) is known, in which glass particles are deposited on a starting base material such as a glass rod to form soot. The porous glass base material can be dehydrated and sintered to make the glass base material for use in the manufacture of optical fibers.

A glass base material for manufacturing an optical fiber can be obtained, for example, by externally depositing SiO₂ fine particles generated by burning silicon compound raw material such as organic siloxane by the OVD method, etc., on a core base material manufactured by the VAD method, etc., to manufacture a porous glass base material, which is then sintered to become transparent glass.

As for the method of manufacturing porous glass base material, JP 2013-177297 describes a method of manufacturing porous glass base material by introducing a liquid silicon compound raw material into a vaporizer heated to a temperature between 150°C and 250°C, vaporizing it, and then depositing SiO₂ fine particles generated by burning the vaporized raw material gas with a burner. In addition, JP 2015-502316 describes a method for manufacturing a porous glass base material by vaporizing a liquid raw material introduced into a vaporizer by contacting it with a high-temperature carrier gas at a temperature of between 150°C and 230°C, and depositing SiO₂ particles generated by burning the vaporized raw material gas with a burner.

### SUMMARY OF THE INVENTION

### PROBLEMS TO BE SOLVED BY THE INVENTION

When organic siloxane in a liquid state, such as octamethylcyclotetrasiloxane (OMCTS), is used as a raw material for glass particles, here is a method of vaporizing the raw material and supplying it to a reaction system. For example, there is a method of vaporizing a raw material in a liquid state by introducing the raw material into a vaporizer and heating therein. However, if the raw material is introduced into the vaporizer whose inner wall is heated to a high temperature, some of the raw material may decompose and polymerize during vaporization, and gel-like polymerized material may be accumulated on the inner wall of the vaporizer and the piping. Accumulation of polymerized material on the inner wall of the vaporizer and on the piping causes an increase in pressure in the vaporizer and, in the worst case, blockage of the piping. To remove the polymerized material, the vaporizer needs to be cleaned, but the equipment needs to be shut down for a while, which makes the production process inefficient. In addition, the deposition of polymerized material on the inner wall of the vaporizer may change the surface condition of the inner wall of the vaporizer and reduce the vaporization capacity of the vaporizer.

The object of the present invention is to provide a method and apparatus of manufacturing a porous glass base material that can suppress the formation of polymerized material when the raw material is vaporized in a vaporizer in the case where an organic siloxane in a liquid state is used as a raw material for glass particles.

### MEANS FOR SOLVING THE PROBLEMS

In the manufacturing method of porous glass base material according to the present invention, a liquid organic siloxane, which is a raw material, is mixed with a carrier gas in a vaporizer, vaporized by the heat generated from the inner wall of the vaporizer heated by a heater unit, and supplied to a burner as a gas raw material. The porous glass base material is manufactured by depositing the glass particles generated by the combustion of the gas raw material on the starting material. The heating output of the heater unit is controlled to meet the temperature requirement that the maximum temperature of the inner wall of the vaporizer is 230°C or lower.

The heating output of the heater unit may be controlled so that the maximum temperature is 210°C or lower.

Furthermore, the heating output of the heater unit may be controlled to meet the temperature requirement that the temperature difference between the maximum and minimum temperatures of the inner wall of the vaporizer is within 30°C.

The heating output of the heater unit may be controlled so that the temperature difference between the maximum temperature and the minimum temperature is within 15°C.

To meet the temperature requirement, the flow rate of the carrier gas and the preheating temperature may be further controlled according to the flow rate of the organic siloxane raw material liquid supplied to the vaporizer.

Temperature measurement points for measuring the temperature of the inner wall of the vaporizer may be provided in a plurality of positions. A plurality of sets of measurement values of each temperature measurement point at the same measurement timing may be collected in advance while changing the heating output of the heater unit under the operating conditions of the vaporizer for manufacturing of the porous glass base material, one of the sets that meet the temperature requirement is extracted, and the measured value of one of the temperature measurement points that constitute the extracted set is set as the target temperature. The heating output of the heater may be controlled so that the measured value at one of the temperature measurement points indicates the target temperature during the manufacturing of the porous glass base material.

The heater unit may include a plurality of heaters in independent systems that are installed in each of a plurality of regions of the inner wall of the vaporizer. Temperature measurement points for measuring the temperature of the inner wall of the vaporizer may be provided in a plurality of positions. The heating output of the heater unit may be controlled so that the measured value at each temperature measurement point meets the temperature requirement during the manufacturing of the porous glass base material.

The heater unit may be adjustable in heat density for a plurality of regions of the inner wall of the vaporizer. Temperature measurement points for measuring the temperature of the inner wall of the vaporizer may be provided in a plurality of positions. The porous glass base material may be manufactured after heating the inner wall with the heater unit under the operating conditions of the vaporizer for the manufacturing of porous glass base material and adjusting the heat density of the heater unit in each of the regions so that the measured values meet the temperature requirements at each of the temperature measurement points in advance.

For example, octamethylcyclotetrasiloxane may be used as the organic siloxane raw material.

In the manufacturing apparatus of porous glass base material according to the present invention, a liquid organic siloxane, which is a raw material, is mixed with a carrier gas in a vaporizer, vaporized by the heat generated from the inner wall of the vaporizer heated by a heater unit, and supplied to a burner as a gas raw material. The porous glass base material is manufactured by depositing the glass particles generated by the combustion of the gas raw material on the starting material. The heating output of the heater unit is controlled to meet the temperature requirement that the maximum temperature of the inner wall of the vaporizer is 230°C or lower.

The control unit may control the heating output of the heater unit so that the maximum temperature is 210°C or lower.

The control unit may further control the heating output of the heater unit to meet the temperature requirement that the temperature difference between the maximum and minimum temperatures of the inner wall of the vaporizer is within 30°C.

The control unit may control the heating output of the heater unit so that the temperature difference between the maximum temperature and the minimum temperature is within 15°C.

To meet the temperature requirement, the control unit may further control the flow rate of the carrier gas and the preheating temperature according to the flow rate of the organic siloxane raw material liquid supplied to the vaporizer.

Temperature measurement sections for measuring the temperature of the inner wall of the vaporizer may be provided in a plurality of positions. A plurality of sets of measurement values of each temperature measurement section at the same measurement timing may be collected in advance while changing the heating output of the heater unit under the operating conditions of the vaporizer for manufacturing of the porous glass base material, one of the sets that meet the temperature requirement is extracted, and the measured value of one of the temperature measurement sections that constitute the extracted set is set as the target temperature. The control unit may control the heating output of the heater so that the measured value at one of the temperature measurement sections indicates the target temperature during the manufacturing of the porous glass base material.

The heater unit may include a plurality of heaters in independent systems that are installed in each of a plurality of regions of the inner wall of the vaporizer. Temperature measurement sections for measuring the temperature of the inner wall of the vaporizer may be provided in a plurality of positions. The control unit may control the heating output of the heater unit so that the measured value at each temperature measurement section meets the temperature requirement during the manufacturing of the porous glass base material.

The heater unit may be adjustable in heat density for a plurality of regions of the inner wall of the vaporizer. Temperature measurement sections for measuring the temperature of the inner wall of the vaporizer may be provided in a plurality of positions. The heat density of the heater unit in each of the regions may be adjusted so that the measured values meet the temperature requirements at each of the temperature measurement sections in advance by heating the inner wall with the heater unit under the operating conditions of the vaporizer for the manufacturing of porous glass base material.

For example, octamethylcyclotetrasiloxane may be used as the organic siloxane raw material.

The surface material of the inner wall of the vaporizer may be, for example, stainless steel, Hastelloy, aluminum, silver, copper, quartz glass, or heat-resistant fluoropolymer.

### Effects of Invention

According to the method and apparatus of manufacturing porous glass base material of the present invention, in the case where an organic siloxane in a liquid state is used as the raw material for glass particles, the formation of polymerized material can be suppressed when the raw material is vaporized in a vaporizer.

### BRIEF DESCRIPTION OF THE DRAWINGS

FIG. 1 illustrates an example of the raw material supply system of the porous glass base material manufacturing apparatus.
FIG. 2 illustrates an example of the configuration of the vaporizer used for the manufacturing method of the porous glass base material.
FIG. 3 illustrates an example of the vaporizer with a carrier gas supply piping on the side facing the atomizer.
FIG. 4 illustrates an example of the vaporizer with separate heaters for each region.
FIG. 5 illustrates an example of the vaporizer in which the heater unit is composed of electric heating wires.

### DETAILED DESCRIPTION OF THE EMBODIMENTS

In the following, an embodiment of the present invention is described. Common components in each drawing, including the drawings used in the description of the background art, are depicted with the same reference numeral.

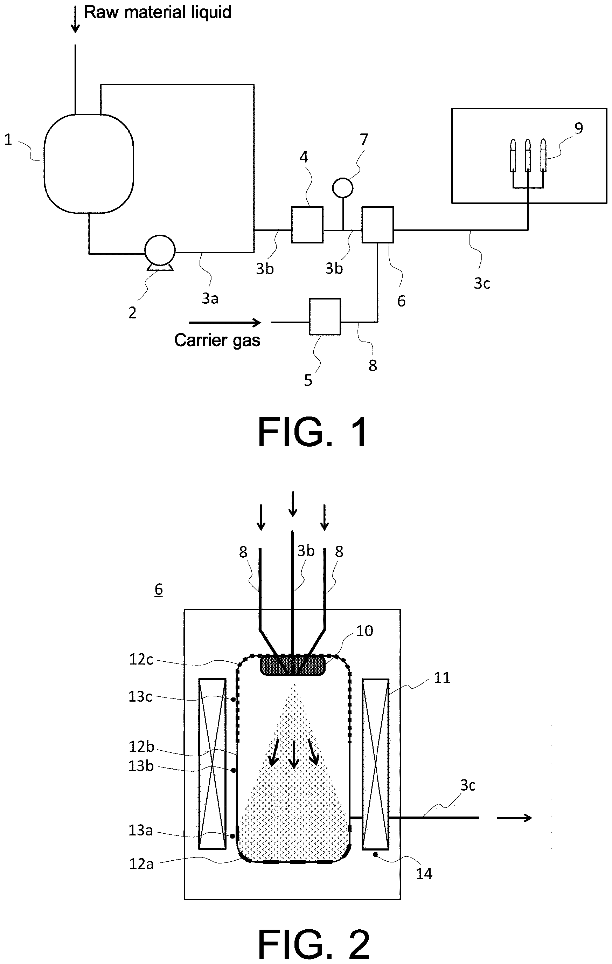

FIG. 1 illustrates an example of a raw material supply system of the porous glass base material manufacturing apparatus used to perform the manufacturing method of the porous glass base material of the present invention.

Organic siloxane in a liquid state (hereinafter referred to as the "raw material liquid") is injected and stored in a raw material liquid tank 1 from the raw material liquid injection piping and then pumped toward a vaporizer 6. For example, a liquid feed pump or gas pressure pumping can be adopted as a method of pumping the raw material liquid from the raw material liquid tank 1. FIG. 1 illustrates the case where a liquid feed pump 2 is employed. After passing through the liquid feed pump 2, the raw material liquid is pumped to a liquid feed piping 3. The liquid feed piping 3 is divided into circulation piping 3a and raw material liquid supply piping 3b that goes to the vaporizer 6. A liquid mass flow controller 4 is installed in the middle of the raw material liquid supply piping 3b to precisely control the flow rate of the raw material liquid. It is preferable to heat the liquid feed piping 3 to the extent that the raw material liquid does not coagulate. Carrier gas via a carrier gas supply piping 8 is supplied to the vaporizer 6 along with the raw material liquid supplied via raw material liquid supply piping 3b. A gas mass flow controller 5 is installed in the middle of the carrier gas supply piping 8. The raw material mixed gas generated by mixing and heating the raw material liquid with the carrier gas in the vaporizer 6 is supplied to a burner 9 through the raw material mixed gas piping 3c.

FIG. 2 illustrates an example of the configuration of the vaporizer 6 used for the manufacturing method of the porous glass base material.

The vaporizer 6 includes an atomizer 10 that injects the raw material liquid and carrier gas into the vaporizer 6, and a heater unit 11 that heats the inner wall. If the shape of the vaporizer 6 is symmetrical with respect to the extended axis line of the injection direction of the atomizer 10, the raw material liquid can be stably vaporized. Preferred shapes include, for example, cylindrical, prismatic, and spherical shapes.

The atomizer 10 ejects the raw material liquid from the center and carrier gas from the surrounding area. The raw material liquid is pulverized by the flow of carrier gas and becomes fine droplets, which are sprayed in a conical shape at a predetermined spray angle starting from atomizer 10.

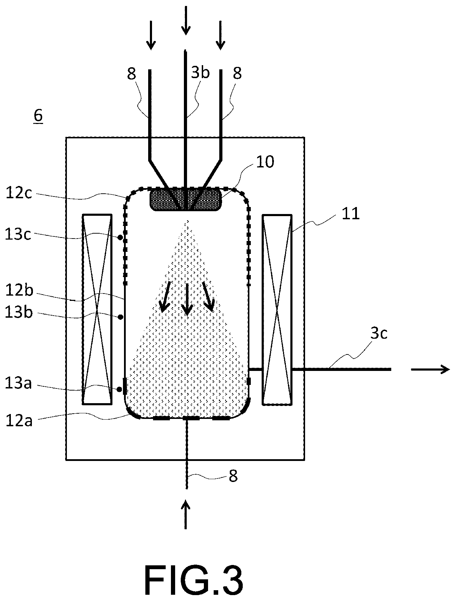

The sprayed droplets of raw material liquid are vaporized by the heat emitted from the heater unit 11 surrounding the vaporizer 6. Specifically, the sprayed droplets of raw material liquid are heated by thermal radiation from the inner wall of the vaporizer 6 and thermal conduction received by the droplets adhering to the inner wall, and thereby vaporization proceeds. To accelerate the vaporization of droplets, the carrier gas supply piping 8 may be further installed on the side of the vaporizer 6 facing the atomizer 10 to introduce additional heated carrier gas, as shown in FIG. 3.

When droplets of the raw material liquid adhering to the inner wall of the vaporizer 6 are heated excessively, the decomposition and polymerization reaction originating from the raw material progresses, and polymerized material tends to accumulate on the inner wall and other surfaces. For this reason, the temperature of the inner wall of the vaporizer 6 should be (boiling point of the raw material liquid - 25) °C or higher from the viewpoint of efficiently vaporizing the raw material liquid. The temperature of the inner wall of the vaporizer 6 should be less than or equal to (boiling point of the raw material liquid + 55°C) from the viewpoint of preventing the accumulation of polymerized material due to the decomposition and polymerization reaction rate of the droplets exceeding the vaporization rate of the raw material liquid. For example, if octamethylcyclotetrasiloxane (OMCTS) with a boiling point of 175°C is used as the organic siloxane raw material, the temperature of the inner wall of the vaporizer 6 is preferably controlled between 150°C and 230°C, and more preferably between 180°C and 210°C.

The region of the inner wall of the vaporizer 6 that is directly exposed to the droplets sprayed from the atomizer 10 loses heat due to the vaporization of the droplets, and the temperature tends to decrease. If the heating output of the heater unit 11 is controlled based on the temperature measured in the region where the temperature has decreased, the region where the droplets are not directly exposed can easily be overheated because the temperature has not decreased originally or the decrease in temperature is relatively small, and there is a possibility that the decomposition polymerization reaction of the raw material will be accelerated by the adhesion of droplets.

In other words, even if the temperature is appropriate at one position on the inner wall, it may be overheated at another position. To suppress the decomposition and polymerization reaction of the raw material, it is not only necessary to control the temperature at the position that serves as the reference for controlling the heating output to be in the appropriate temperature range, but it is also desirable to control the temperature at the same timing so that the difference in temperature depending on positions is as small as possible. The difference in temperature depending on the position of the inner wall is preferably controlled so that the difference between the maximum and minimum temperature is within 30°C, for example, and it is more preferable if the difference can be controlled within 15°C.

Therefore, for example, a plurality of temperature measurement points are provided on the inner wall, and a plurality of sets of measurement values of each temperature measurement point at the same measurement timing are collected in advance while changing the heating output of the heater unit 11 under the operating conditions of the vaporizer 6 (input amount of raw material liquid and carrier gas, injection temperature, etc.) for manufacturing of the porous glass base material. Then, from among them, one of the sets where, for example, each measurement value is between 180°C and 210°C and the difference between the maximum temperature and the minimum temperature is within 15°C is extracted.

Then, the measured value at one of the temperature measurement points in the extracted set is set as the target temperature, and the heating output of the heater unit 11 is controlled so that the measured value at one of the temperature measurement points becomes the target temperature during the manufacturing of the porous glass base material. For example, when the sets of measured values at a certain measurement timing at the three temperature measurement points (the first, second, and third measurement points) are 183°C, 185°C, and 180°C, and when the measured value at the second measurement point is the target temperature, the heating output of the heater unit 11 is controlled so that the measured value at the second measurement point becomes 185°C.

This allows the temperature of the inner wall of the vaporizer 6 to be controlled between 180°C and 210°C and the difference between the maximum and minimum temperatures to be within 15°C. This suppresses the decomposition and polymerization reaction of the raw material in the vaporizer 6 and prevents polymerized material from accumulating on the inner wall of the vaporizer 6 and the piping.

A plurality of temperature measurement points on the inner wall of the vaporizer 6 should be provided according to the atomizing angle of the atomizer 10 and the shape of the vaporizer 6.

Specifically, for example, it is preferable to provide at least one point in a region of the inner wall where the droplets of the raw material liquid sprayed conically at a predetermined spray angle from the atomizer 10 directly hit, and at least one point in a region of the inner wall where the droplets do not directly hit. Temperature differences are likely to occur between the first inner wall region, which is the inner wall region where the droplet directly hits, the second inner wall region, which is the inner wall region near the atomizer 10, and the third inner wall region, which is the other inner wall region. For this reason, it is more preferable to provide at least one temperature measurement point in each of these three inner wall regions. If the inner wall of the vaporizer 6 is cylindrical in shape and the atomizer 10 is installed on one bottom surface of the cylinder, and the droplets are sprayed in a conical shape toward the other bottom surface, these three regions may be, for example, the inner wall in the height range from the other bottom surface to the highest height where the droplets hit directly as the first inner wall region 12a, the inner wall in the lower half of the height range bisecting the height from the said highest height to the height of one bottom surface as the second inner wall region 12b, and the inner wall in the upper half of the height range as the third inner wall region 12c. FIG. 2 shows an example of the first, second, and third interior wall measurement points 13a, 13b, and 13c are respectively provided in the first, second, and third interior wall regions 12a, 12b, and 12c defined in this way.

In order to easily reduce the difference in temperature depending on the position of the inner wall of the vaporizer 6, the heating output of the heater unit 11 may be different for each region where the inner wall is divided into multiple sections.

For example, the heater unit 11 may be divided and provided in separate regions for each of the regions of the inner wall, or an integrated heater unit 11 may be configured to have different heat generation densities depending on its position.

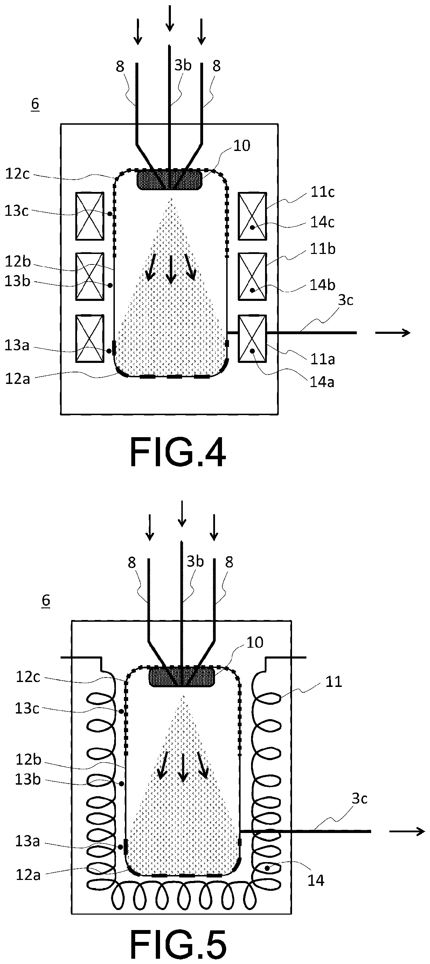

For example, when the heater unit 11 is divided and provided in three regions, the first, second, and third heaters 11a, 11b, and 11c heat the first, second, and third inner wall regions 12a, 12b, and 12c, respectively, as shown in FIG. 4. Each heater system is independent. The first, second, and third inner wall measurement points 13a, 13b, and 13c respectively corresponding to the first, second, and third inner wall regions 12a, 12b, and 12c are provided. Then, the heating output of each heater is controlled so that the measured value at each measurement point indicates a predetermined temperature (e.g., 185°C). This makes it easy to reduce the difference in temperature depending on the position in the inner wall of the vaporizer 6.

It is also possible to control the heating output of each heater in each region based only on the measured values at a single measurement point. For example, in advance, under the operating conditions of the vaporizer 6 at the time of porous glass base material production (input amount of raw material liquid and carrier gas, injection temperature, etc.), power is input to each heater system so that the measured value at the temperature measurement point corresponding to each heater reaches a predetermined temperature (e.g., 185°C), and the ratio of the power input to each heater system at this time is obtained. Thereby, by controlling the power input to the heater so that the measured value at the temperature measurement point corresponding to a heater indicates a predetermined temperature, and by controlling the power input to other heaters based on the ratio of the power input to each heater system calculated in advance, the heating output of each heater can be controlled, and the difference in temperature depending on the position of the inner wall of the vaporizer 6 can be reduced.

On the other hand, a method of configuring the integral heater unit 11 so that the heat density differs depending on the position is, for example, to use resistance heating. Specifically, for example, coiled electric heating wire is used, and the winding is made relatively dense in regions where relatively high temperatures are desired, and loosely wound in regions where relatively low temperatures are desired. Specifically, the heating output of the heater unit 11 is controlled in advance so that the measured value at one of the temperature measurement points indicates a predetermined temperature (e.g., 185°C) under the operating conditions of the vaporizer 6 (input amount of raw material liquid and carrier gas, injection temperature, etc.) for manufacturing of the porous glass base material, and the winding density of the electric heating wire is adjusted so that the measured value at the other temperature measurement points becomes the same level.

For example, as shown in FIG. 5, the inner wall of the vaporizer 6 is divided into three regions, the first inner wall region 12a, the second inner wall region 12b, and the third inner wall region 12c, and the heating output of the heater unit 11 is controlled so that the measured value at the third inner wall measurement point 13c among the first inner wall measurement point 13a, the second inner wall measurement point 13b, and the third inner wall measurement point 13c provided corresponding to each region indicates a predetermined temperature. If the measured value at the first inner wall measurement point 13a is lower than the predetermined temperature and the measured value at the second inner wall measurement point 13b is higher than the predetermined temperature, the winding density of the electric heating wire in the vicinity of the first inner wall region 12a is made more dense and the winding density of the electric heating wire in the vicinity of the second inner wall region 12b is made more sparse, so that the measured values at the first inner wall measurement point 13a and the second inner wall measurement point 13b are adjusted to be as close as possible to the predetermined temperature.

By controlling the heating output of the heater unit 11 adjusted in this way so that the measured value at the predetermined temperature measurement point (e.g., the third inner wall measurement point 13c) indicates the predetermined temperature, the other temperature measurement points are also controlled to generally the same temperature, thus making it easy to reduce the difference in temperature depending on the position of the inner wall of the vaporizer 6.

In the above, a case in which the measured values at the temperature measurement points on the inner wall are used to control the temperature of the inner wall is described, but the temperature measurement points can be set up at positions away from the inner wall, and the temperature can be controlled using the measured values at those positions. For example, in the examples of FIGS. 2 and 5, the heater measurement point 14 is located near the heater unit 11. In the example of FIG. 4, the first heater measurement point 14a, the second heater measurement point 14b, and the third heater measurement point 14c are located near the first heater 11a, the second heater 11b, and the third heater 11c, respectively.

In this case, the temperature of the inner wall is indirectly controlled, but by controlling based on the measured value at the temperature measurement point near the heater, the temperature of the heater is less likely to overshoot, and stable control is possible.

In the vaporizer 6, it is preferable that the material of the inner wall that comes in contact with liquid and gas is a material that is less likely to become a catalyst for the decomposition and polymerization reaction of the raw material under high temperature. Specifically, it is preferable that the inner wall of the vaporizer is one of the following: stainless steel (e.g., SUS316L, SUS316, SUS304L, SUS304), Hastelloy, aluminum, silver, copper, quartz glass, or heat-resistant fluoropolymer (e.g., polytetrafluoroethylene (PTFE), perfluoroalkoxyalkane (PFA)). In particular, stainless steel with a passivated surface is preferred.

The temperature of the inner wall of the vaporizer 6 may be controlled only by adjusting the heating output by adjusting the power input to the heater unit 11, or further by adjusting the flow rate of the carrier gas and the preheating temperature depending on the flow rate of the raw material liquid. This allows for more flexible control of the temperature.

The control of the heating output by the heater unit 11, the amount of raw material liquid and carrier gas introduced, and the preheating temperature to control the temperature of the inner wall of the vaporizer 6 may be performed, for example, by the control unit (not shown) provided in the porous glass base material manufacturing apparatus.

The raw material liquid is supplied to the vaporizer 6 via the liquid mass flow controller 4. The liquid mass flow controller 4 changes the supply flow rate of the raw material liquid in the range of 0 g/min to 100 g/min, for example, depending on the deposition conditions during the manufacturing of porous glass base material. In response to this change in the supply flow rate, the temperature in the vaporizer 6 temporarily fluctuates. Specifically, the temperature temporarily decreases when the supply flow rate increases, and temporarily increases when the supply flow rate decreases.

When using OMCTS as an organic siloxane raw material, the purity is preferably 99 mass% or higher, more preferably 99.5% or higher, and even more preferably 99.9% or higher. OMCTS is likely to contain hexamethylcyclotrisiloxane (HMCTS), which is a trimeric cyclic siloxane, and decamethylcyclopentasiloxane (DMCPS), which is a pentameric cyclic siloxane, as impurity components. These impurity components have different reactivity and boiling points from OMCTS. By increasing the purity of OMCTS, it is possible to prevent the highly reactive HMCTS from reacting and producing polymerization products, and it is also not necessary to excessively increase the heating temperature of the piping for raw material gas to match the high boiling point of DMCPS.

The carrier gas is supplied to the vaporizer 6 via the gas mass flow controller 5. The carrier gas is supplied by varying the supply flow rate from 15 liters/minute to 40 liters/minute at 0°C and 1 atmosphere-equivalent, for example, depending on the deposition conditions during the manufacturing of the porous glass base material. As the carrier gas is increased, the droplet diameter of the raw material liquid sprayed from the atomizer 10 becomes smaller, and the droplets vaporize more easily. Therefore, most of the sprayed droplets of the raw material liquid are vaporized by thermal radiation from the inner wall, and the amount of droplets that adhere to the inner wall of the vaporizer and vaporize tends to decrease, thus reducing the variation of temperature distribution on the inner wall of the vaporizer 6. The carrier gas may be heated beforehand and then supplied to the vaporizer 6. This further accelerates the vaporization of droplets of the raw material liquid, which further reduces the number of droplets that adhere to the inner wall of the vaporizer 6 and vaporize, and further reduces the variation of temperature distribution on the inner wall of the vaporizer 6.

As the carrier gas, an inert gas such as nitrogen, argon and helium, oxygen, or a mixed gas of oxygen and an inert gas may be used. By using an inert gas such as nitrogen, argon, or helium as the carrier gas, the raw material can be safely transferred. On the other hand, it is not desirable to increase the ratio of inert gas, which is irrelevant to the reaction, too much. When oxygen or a mixture of oxygen and inert gas is used as the carrier gas, complete combustion is promoted by premixing the carrier gas with the raw material in the vaporizer. The amount of oxygen supplied should be sufficient to prevent backfire.

The raw material mixed gas, which is a mixture of the raw material gas vaporized in the vaporizer 6 and the carrier gas, is supplied to the burner 9 through the raw material mixed gas piping 3c. The raw material mixed gas piping 3c should be heated above the liquefaction temperature calculated from the partial pressure of the raw material mixed gas in order to prevent re-liquefaction of the raw material gas components. Specifically, if the raw material is OMCTS, the liquefaction temperature is 175°C when the partial pressure is 1 atm and 134°C when the partial pressure is 0.3 atm. For example, an electric heater can be used to heat the raw material mixed gas piping 3c.

If the combustion reaction of the raw material is insufficient in the burner 9, impurities such as gels and carbon particles generated by incomplete combustion adhere to the burner 9 and further hinder the combustion reaction or get mixed into the porous glass base material. Impurities in the porous glass base material become bubbles during sintering and cause defects in the porous glass base material. By using oxygen as a carrier gas, and premixing the raw material and oxygen in advance, and supplying it to the burner 9, the reactivity of the raw material can be enhanced. Thus, oxygen may be used as the carrier gas, and the raw material and oxygen may be mixed in the vaporizer 6, or an inert gas such as nitrogen may be used as the carrier gas, and oxygen may be mixed with the raw material mixed gas downstream of the vaporizer 6. When oxygen is mixed with the raw material mixed gas downstream of the vaporizer 6, the oxygen may be preheated and then mixed with the raw material mixed gas to prevent re-liquefaction of the raw material gas components.

As the burner 9, a multi-nozzle burner with multiple nozzles lined up, or a multi-tube burner with concentric multiple arrangements of nozzles can be used. The gas supplied to the burner 9 includes seal gas, combustible gas for combustion, oxygen gas for combustion, etc., in addition to the premixed raw material mixed gas. Hydrogen, methane, ethane, and propane can be used as combustible gas for combustion.

### [EXAMPLES]

### (Example 1)

A glass base material was manufactured using the vaporizer 6 shown in FIG. 2. Specifically, the inner wall of the vaporizer 6 was cylindrical with a diameter of 40 mm and a height of 120 mm, and the atomizer 10 is installed at one bottom face of the cylinder so that droplets are sprayed out at an atomization angle θ = 30° toward the other bottom face of the cylinder. Three temperature measurement points were set on the same generating line of the cylindrical inner wall, 30 mm (first inner wall measurement point 13a), 65 mm (second inner wall measurement point 13b), and 100 mm (third inner wall measurement point 13c) from the bottom face opposite to the bottom face on which the atomizer 10 is provided, respectively. The heating output of heater unit 11 was controlled so that the measured value at the second inner wall measurement point 13b was 185°C.

Then, OMCTS, which is the organic siloxane raw material, was supplied to vaporizer 6 at a flow rate of 50 g/min. In addition, N₂ gas, which is the carrier gas, was preheated at 270°C and supplied to the vaporizer 6 at a flow rate of 30 liters/minute at 0°C and 1 atmosphere-equivalent. The raw material mixture gas generated in the vaporizer 6 was supplied to the burner 9, and the SiO₂ fine particles generated in the burner 9 were deposited on the starting material to make a porous glass base material, which was then sintered to manufacture the glass base material.

The temperature readings of the first, second, and third inner wall measurement points 13a, 13b, and 13c during manufacturing were 183°C, 185°C, and 180°C, respectively. The difference between the highest and lowest temperatures was 5°C.

When gel-like material accumulates in the vaporizer 6 and downstream piping, the pressure at the inlet side of the vaporizer 6 gradually increases. Therefore, the pressure gauge 7 installed upstream of the vaporizer 6 was monitored, and if a pressure increase of 0.1 MPa was observed compared to the pressure in the steady state where there was no accumulation of gel-like material, it was determined that the accumulation of gel-like material had progressed and the vaporizer 6 and piping needed to be cleaned.

Although the glass base materials were continuously manufactured under the above conditions, there was almost no adhesion of gel-like material to the inner wall of the vaporizer 6, and no pressure increase of more than 0.1 MPa was observed even after the cumulative operating time of the vaporizer 6 had passed 3,000 hours.

### (Example 2)

A glass base material was manufactured using the vaporizer 6 shown in FIG. 4. The shape and size of the inner wall of the vaporizer 6, the installation position and injection angle of the atomizer 10, and the arrangement of the temperature measurement points were the same as in Example 1. As for the heaters, the first, second, and third heaters (11a, 11b, and 11c, respectively) with independent systems are provided for the first, second, and third inner wall regions 12a, 12b, and 12c, respectively, which divide the cylindrical inner wall into three equal parts in the height direction. The first, second, and third inner wall measurement points 13a, 13b, and 13c were the temperature measurement points of the first, second, and third inner wall regions 12a, 12b, and 12c, respectively. The heating output of each heater was controlled so that the measured value at each measurement point was 185°C.

Then, OMCTS, which is the organic siloxane raw material, was supplied to vaporizer 6 at a flow rate of 65 g/min. In addition, N₂ gas, which is the carrier gas, was preheated at 270°C and supplied to the vaporizer 6 at a flow rate of 30 liters/minute at 0°C and 1 atmosphere-equivalent. The raw material mixture gas generated in the vaporizer 6 was supplied to the burner 9, and the SiO₂ fine particles generated in the burner 9 were deposited on the starting material to make the porous glass base material, which was then sintered to manufacture the glass base material.

The temperature readings of the first, second, and third inner wall measurement points 13a, 13b, and 13c during manufacturing were all 185°C, and the difference between the highest and lowest temperatures was 0°C.

Although the glass base materials were continuously manufactured under the above conditions, there was almost no adhesion of gel-like material to the inner wall of the vaporizer 6, and no pressure increase of more than 0.1 MPa was observed even after the cumulative operating time of the vaporizer 6 had passed 3,000 hours.

### (Example 3)

Similar to Example 1, a glass base material was manufactured using the vaporizer 6 shown in FIG. 2. The heating output of heater unit 11 was controlled so that the measured value at the first inner wall measurement point 13a was 185°C.

Then, OMCTS, which is the organic siloxane raw material, was supplied to vaporizer 6 at a flow rate of 65 g/min. In addition, N₂ gas, which is the carrier gas, was preheated at 270°C and supplied to the vaporizer 6 at a flow rate of 30 liters/minute at 0°C and 1 atmosphere-equivalent. The raw material mixture gas generated in the vaporizer 6 was supplied to the burner 9, and the SiO₂ fine particles generated in the burner 9 were deposited on the starting material to make the porous glass base material, which was then sintered to manufacture the glass base material.

The temperature readings of the first, second, and third inner wall measurement points 13a, 13b, and 13c during manufacturing were 185°C, 203°C, and 185°C, respectively. The difference between the highest and lowest temperatures was 18°C.

When the glass base materials were continuously manufactured under the above conditions, a pressure increase of 0.1 MPa was observed when the cumulative operating time of the vaporizer 6 had passed 3,000 hours, and gel-like material adhered to the inner wall of the vaporizer 6.

### (Example 4)

Similar to Example 2, a glass base material was manufactured using the vaporizer 6 shown in FIG. 4. However, apart from the first, second, and third inner wall measurement points 13a, 13b, and 13c on the inner wall, the temperature measurement points 14a, 14b, and 14c corresponding to each heater, respectively, were further installed near the first, second, and third heaters 11a, 11b, and 11c, respectively, and the heating output of each heater was controlled by the measured values at these points. The heating output of each heater was controlled so that the measured values at the first, second, and third heater measurement points 14a, 14b, and 14c, respectively, were all 187°C.

Then, OMCTS, which is the organic siloxane raw material, was supplied to vaporizer 6 at a flow rate of 65 g/min. In addition, N₂ gas, which is the carrier gas, was preheated at 270°C and supplied to the vaporizer 6 at a flow rate of 30 liters/minute at 0°C and 1 atmosphere-equivalent. The raw material mixture gas generated in the vaporizer 6 was supplied to the burner 9, and the SiO₂ fine particles generated in the burner 9 were deposited on the starting material to make the porous glass base material, which was then sintered to manufacture the glass base material.

The temperature readings of the first, second, and third inner wall measurement points 13a, 13b, and 13c during manufacturing were 183°C, 187°C, and 186°C, respectively. The difference between the highest and lowest temperatures was 4°C.

Although the glass base materials were continuously manufactured under the above conditions, there was almost no adhesion of gel-like material to the inner wall of the vaporizer 6, and no pressure increase of more than 0.1 MPa was observed even after the cumulative operating time of the vaporizer 6 had passed 3,000 hours.

### (Example 5)

A glass base material was manufactured using the vaporizer 6 shown in FIG. 5. The shape and size of the inner wall of the vaporizer 6, the installation position and injection angle of the atomizer 10, and the arrangement of the temperature measurement points were the same as in Example 1. For the heater unit 11, coiled electric heating wire surrounding the inner wall of the vaporizer 6 was adopted, and the winding density was coarse, coarse, and dense from the upper atomizer 10 side, corresponding to the three regions of the cylindrical inner wall divided into three equal parts in the height direction. As for the temperature measurement points, apart from the third inner wall measurement point 13c, the second inner wall measurement point 13b, and the first inner wall measurement point 13a provided on the inner wall, a heater measurement point 14 was further provided near the bottom of the heater unit 11.

In advance, OMCTS, the organic siloxane raw material, was supplied to the vaporizer 6 at a flow rate of 65 g/min and N₂ gas preheated to 270°C, which was the carrier gas, at a flow rate of 30 liters/min (0°C, 1 atm equivalent) while being heated by the heater unit 11. The temperature was measured at each of the first, second, and third inner wall measurement points 13a, 13b, and 13c, respectively, and the winding density of the electric heating wire was adjusted so that the difference between the highest and lowest temperatures was within 10°C.

Then, the heating output of the heater unit 11 was controlled so that the measured value at the heater measurement point 14 was 190°C. OMCTS, the organic siloxane raw material, was supplied to the vaporizer 6 at a flow rate of 65 g/min, and N₂ gas, which was the carrier gas, was supplied to vaporizer 6 at a flow rate of 30 liters/min (0°C, 1 atm equivalent) while preheated at 270°C. The raw material mixture gas generated in the vaporizer 6 was supplied to the burner 9, and the SiO₂ fine particles generated in the burner 9 were deposited on the starting material to make the porous glass base material, which was then sintered to manufacture the glass base material.

The temperature readings of the first, second, and third inner wall measurement points 13a, 13b, and 13c during manufacturing were 185°C, 188°C, and 189°C, respectively. The difference between the highest and lowest temperatures was 4°C.

Although the glass base materials were continuously manufactured under the above conditions, there was almost no adhesion of gel-like material to the inner wall of the vaporizer 6, and no pressure increase of more than 0.1 MPa was observed even after the cumulative operating time of the vaporizer 6 had passed 3,000 hours.

### (Comparative Example 1)

Similar to Example 1, a glass base material was manufactured using the vaporizer 6 shown in FIG. 2. The heating output of heater unit 11 was controlled so that the measured value at the first inner wall measurement point 13a was 200°C.

Then, OMCTS, which is the organic siloxane raw material, was supplied to vaporizer 6 at a flow rate of 65 g/min. In addition, N₂ gas, which is the carrier gas, was preheated at 200°C and supplied to the vaporizer 6 at a flow rate of 20 liters/minute at 0°C and 1 atmosphere-equivalent. The raw material mixture gas generated in the vaporizer 6 was supplied to the burner 9, and the SiO₂ fine particles generated in the burner 9 were deposited on the starting material to make the porous glass base material, which was then sintered to manufacture the glass base material.

The temperature readings of the first, second, and third inner wall measurement points 13a, 13b, and 13c during manufacturing were 200°C, 225°C, and 194°C, respectively. The difference between the highest and lowest temperatures was 31°C.

When the glass base materials were continuously manufactured under the above conditions, a pressure increase of 0.1 MPa was observed when the cumulative operating time of the vaporizer 6 had passed 1,500 hours, and gel-like material adhered to the inner wall of the vaporizer 6.

### (Comparative Example 2)

Similar to Example 1, a glass base material was manufactured using the vaporizer 6 shown in FIG. 2. The heating output of heater unit 11 was controlled so that the measured value at the first inner wall measurement point 13a was 220°C.

Then, OMCTS, which is the organic siloxane raw material, was supplied to vaporizer 6 at a flow rate of 65 g/min. In addition, N₂ gas, which is the carrier gas, was preheated at 200°C and supplied to the vaporizer 6 at a flow rate of 20 liters/minute at 0°C and 1 atmosphere-equivalent. The raw material mixture gas generated in the vaporizer 6 was supplied to the burner 9, and the SiO₂ fine particles generated in the burner 9 were deposited on the starting material to make the porous glass base material, which was then sintered to manufacture the glass base material.

The temperature readings of the first, second, and third inner wall measurement points 13a, 13b, and 13c during manufacturing were 211°C, 248°C, and 219°C, respectively. The difference between the highest and lowest temperatures was 37°C.

When the glass base materials were continuously manufactured under the above conditions, a pressure increase of 0.1 MPa was observed when the cumulative operating time of the vaporizer 6 had passed 1,000 hours, and gel-like material adhered to the inner wall of the vaporizer 6.

Table 1 summarizes the various conditions and the gel-like material adhesion to the inner wall of the vaporizer 6 for each of Examples 1-5 and Comparative Examples 1-2. The adhesion of the gel-like material is classified as "A" when there is almost no adhesion after 3,000 hours of cumulative operation of the vaporizer 6, "B" when there is obvious adhesion, "C" when 1,500 hours of cumulative operation time has passed, and "D" when there is obvious adhesion after 1,000 hours of cumulative operation time.

As can be seen from the table, in order to suppress the adhesion of gel-like material to the inner wall of the vaporizer 6, etc., the temperature of the inner wall of the vaporizer 6 should be controlled to at least 230°C or lower, and more preferably to 210°C or lower. Furthermore, the difference between the maximum and minimum temperatures of the inner wall is preferably at least within 30°C, and more preferably within 15°C.

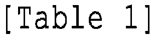

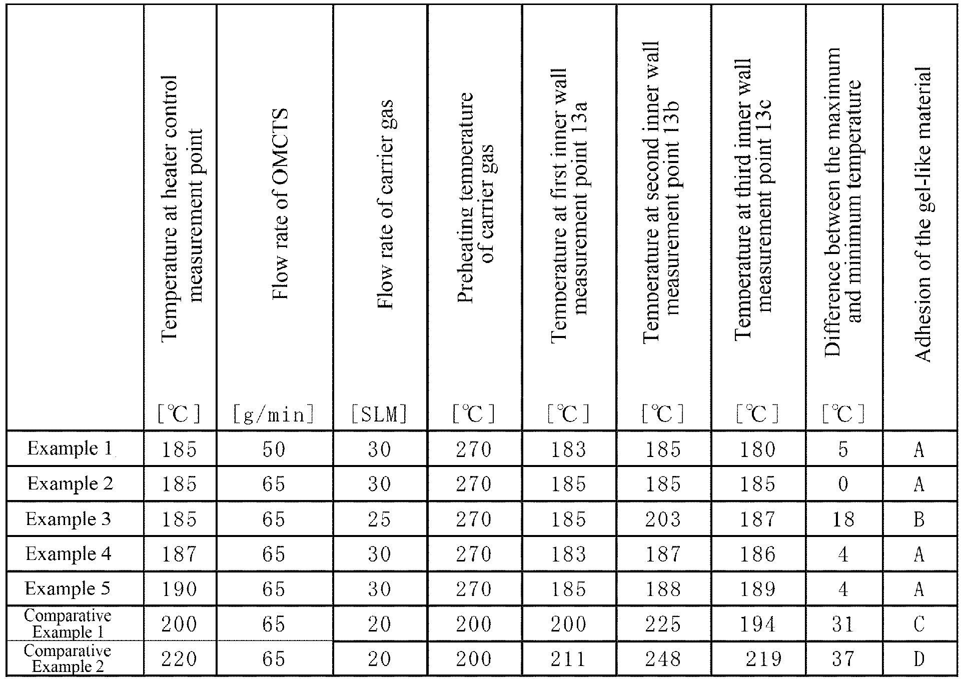

The present invention is not limited to the above embodiments and examples, but any changes that have substantially the same configuration as the technical ideas described in the claims of the present invention and that produce similar effects are included in the technical scope of the present invention.

## Claims

1. A manufacturing method of porous glass base material, in which
a porous glass base material is manufactured by mixing liquid organic siloxane, which is the raw material, with a carrier gas in a vaporizer, vaporizing the mixture by heat generated from the inner wall of the vaporizer heated by a heater unit, supplying the vaporized gas raw material to a burner, and depositing the glass particles generated by the combustion of the gas raw material on the starting material,
wherein the heating output of the heater unit is controlled to meet the temperature requirement that the maximum temperature of the inner wall of the vaporizer is 230°C or less.

2. The manufacturing method of porous glass base material according to claim 1, wherein the heating output of the heater unit is controlled to meet the temperature requirement that the maximum temperature is 210°C or less.

3. The manufacturing method of porous glass base material according to claim 1 or 2, wherein the heating output of the heater unit is controlled to meet the temperature requirement that the temperature difference between the maximum and minimum temperatures of the inner wall of the vaporizer is within 30°C.

4. The manufacturing method of porous glass base material according to claim 3, wherein the heating output of the heater unit is controlled to meet the temperature requirement that the temperature difference is within 15°C.

5. The manufacturing method of porous glass base material according to any one of claims 1 to 4, wherein the flow rate of the carrier gas and the preheating temperature are controlled to meet the temperature requirement and further to depend on the flow rate of the organic siloxane raw material liquid supplied to the vaporizer.

6. The manufacturing method of porous glass base material according to any one of claims 1 to 5,
wherein temperature measurement points for measuring the temperature of the inner wall of the vaporizer are provided at a plurality of positions,
wherein a plurality of sets of measurement values of each temperature measurement point at the same measurement timing are collected in advance while changing the heating output of the heater unit under the operating conditions of the vaporizer for manufacturing of the porous glass base material, one of the sets that meet the temperature requirement is extracted, and the measured value of one of the temperature measurement points that constitutes the extracted set is set as the target temperature, and
wherein the heating output of the heater is controlled so that the measured value at one of the temperature measurement points indicates the target temperature during the manufacturing of the porous glass base material.

7. The manufacturing method of porous glass base material according to any one of claims 1 to 5,
wherein the heater unit includes a plurality of heaters in independent systems that are installed in each of a plurality of regions of the inner wall of the vaporizer,
wherein a temperature measurement point for measuring the temperature of the inner wall is provided at each region, and
wherein the heating output of the heater unit is controlled so that the measured value at each temperature measurement point meets the temperature requirement.

8. The manufacturing method of porous glass base material according to any one of claims 1 to 5,
wherein the heater unit is adjustable in heat density for a plurality of regions of the inner wall of the vaporizer,
wherein a temperature measurement point for measuring the temperature of the inner wall is provided at each region, and
wherein the porous glass base material is manufactured after heating the inner wall with the heater unit under the operating conditions of the vaporizer for the manufacturing of porous glass base material and adjusting the heat density of the heater unit in each of the regions so that the measured values meet the temperature requirements at each of the temperature measurement points in advance.

9. The manufacturing method of porous glass base material according to any one of claims 1 to 8, wherein the organic siloxane raw material is octamethylcyclotetrasiloxane.

10. A manufacturing apparatus of porous glass base material, in which a porous glass base material is manufactured by mixing liquid organic siloxane, which is the raw material, with a carrier gas in a vaporizer, vaporizing the mixture by heat generated from the inner wall of the vaporizer heated by a heater unit, supplying the vaporized gas raw material to a burner, and depositing the glass particles generated by the combustion of the gas raw material on the starting material,
wherein the manufacturing apparatus comprises a control unit that controls the heating output of the heater unit to meet the temperature requirement that the maximum temperature of the inner wall of the vaporizer is 230°C or less.

11. The manufacturing apparatus of porous glass base material according to claim 10, wherein the control unit controls the heating output of the heater unit to meet the temperature requirement that the maximum temperature is 210°C or less.

12. The manufacturing apparatus of porous glass base material according to claim 10 or 11, wherein the control unit controls the heating output of the heater unit to meet the temperature requirement that the temperature difference between the maximum and minimum temperatures of the inner wall of the vaporizer is within 30°C.

13. The manufacturing apparatus of porous glass base material according to claim 12, wherein the control unit controls the heating output of the heater unit to meet the temperature requirement that the temperature difference is within 15°C.

14. The manufacturing apparatus of porous glass base material according to any one of claims 10 to 13, wherein the control unit controls the flow rate of the carrier gas and the preheating temperature to meet the temperature requirement and further to depend on the flow rate of the organic siloxane raw material liquid supplied to the vaporizer.

15. The manufacturing apparatus of porous glass base material according to any one of claims 10 to 14,
wherein temperature measurement sections for measuring the temperature of the inner wall of the vaporizer is provided in a plurality of positions,
wherein a plurality of sets of measurement values of each temperature measurement section at the same measurement timing are collected in advance while changing the heating output of the heater unit under the operating conditions of the vaporizer for manufacturing of the porous glass base material, one of the sets that meet the temperature requirement is extracted, and the measured value of one of the temperature measurement sections that constitutes the extracted set is set as the target temperature, and
wherein the control unit controls the heating output of the heater so that the measured value at one of the temperature measurement sections indicates the target temperature during the manufacturing of the porous glass base material.

16. The manufacturing apparatus of porous glass base material according to any one of claims 10 to 14,
wherein the heater unit includes a plurality of heaters in independent systems that are installed in each of a plurality of regions of the inner wall of the vaporizer,
wherein a temperature measurement section for measuring the temperature of the inner wall is provided at each region, and
wherein the control unit controls the heating output of the heater unit so that the measured value at each temperature measurement section meets the temperature requirement.

17. The manufacturing apparatus of porous glass base material according to any one of claims 10 to 14,
wherein the heater unit is adjustable in heat density for a plurality of regions of the inner wall of the vaporizer,
wherein a temperature measurement section for measuring the temperature of the inner wall is provided at each region, and
wherein the heat density of the heater unit in each of the regions is adjusted so that the measured values meet the temperature requirements at each of the temperature measurement points in advance by heating the inner wall with the heater unit under the operating conditions of the vaporizer for the manufacturing of porous glass base material.

18. The manufacturing apparatus of porous glass base material according to any one of claims 10 to 17, wherein the organic siloxane raw material is octamethylcyclotetrasiloxane.

19. The manufacturing apparatus of porous glass base material according to any one of claims 10 to 18, wherein the surface material of the inner wall of the vaporizer is any one of stainless steel, Hastelloy, aluminum, silver, copper, quartz glass, and heat-resistant fluoropolymer.
